# EUROPEAN PATENT APPLICATION

(11) **EP 4 553 448 A1**
(43) Date of publication of application: **14.05.2025**
(21) Application number: 23942604.2
(22) Date of filing: 02.11.2023
(51) Int. Cl.: G01C 15/00

(54) **CONTROL METHOD FOR MEASUREMENT SYSTEM, AND MEASUREMENT SYSTEM AND COMPUTER-READABLE MEDIUM**

(30) Priority: 05.09.2023 CN 202311137947
(71) Applicant: Comnav Technology Ltd., Shanghai 201801 (CN)
(72) Inventor: WANG, Lei, Shanghai 201801 (CN); CHEN, Qiang, Shanghai 201801 (CN); ZHANG, Kai, Shanghai 201801 (CN)
(74) Representative: Guardian IP Consulting I/S
(86) International application number: PCT/CN2023/129250
(87) International publication number: WO 2025/050496

(57) **Abstract**

The present disclosure discloses a control method of a measurement system. The system includes a navigation module, a laser distance measuring module and a support portion. The method includes: obtaining relative position parameters between the navigation module and the laser distance measuring module; obtaining parameter information of the support portion; switching to a first measurement mode, wherein coordinates of a point to be measured are obtained according to first measurement information and the parameter information; switching to a second measurement mode, wherein coordinates of a point to be measured are obtained according to the second measurement information and the parameter information; and switching to a third measurement mode, wherein coordinates of the point to be measured are obtained according to the second measurement information, the relative position parameters, and the distance information. The measurement system and the control method have the advantages of high positioning and navigation accuracy.

## Description

### TECHNICAL FIELD

The present disclosure relates to the field of satellite navigation technology, and in particular to a control method of a measurement system, a measurement system implementing the control method, and a computer readable medium.

### BACKGROUND

RTK (Real-time kinematic) technology can achieve centimeter-level positioning accuracy in real-time in outdoor environments and is widely used in unmanned driving, precision agriculture, deformation monitoring, mechanical control, and unmanned aerial vehicle and other fields.

However, RTK technology needs to receive satellite signals to position. For example, when the carrier passes through woods or tree shades, urban canyons formed by high-rise buildings, bridges, tunnels and other places, the quality of the received satellite signal will be poor due to obstruction, resulting in errors in the RTK positioning results. Therefore, the application of positioning and navigation device is often restricted by the operating environment, and it is necessary to integrate multiple sensors to provide positioning and navigation information in a mutually complementary manner.

### SUMMARY

To solve the above problems, an embodiment of the present disclosure provides a control method of a measurement system including a navigation module, a laser distance measuring module and a support portion. The control method includes: obtaining relative position parameters between the navigation module and the laser distance measuring module; obtaining parameter information of the support portion; switching to a first measurement mode, obtaining first measurement information of the navigation module, and obtaining coordinates of a point to be measured according to the first measurement information and the parameter information of the support portion; or, switching to a second measurement mode, obtaining second measurement information of the navigation module, and obtaining coordinates of a point to be measured according to the second measurement information and the parameter information of the support portion, or; switching to a third measurement mode, obtaining second measurement information of the navigation module and distance information between the laser distance measuring module and a point to be measured, and obtaining coordinates of the point to be measured according to the second measurement information, the relative position parameters between the navigation module and the laser distance measuring module, and the distance information.

In some embodiments, the method further includes: initializing the navigation module to obtain initial values of the navigation module.

In some embodiments, the step of initializing the navigation module to obtain initial values of the navigation module includes: using the navigation module and the support portion to initialize or using the navigation module and the laser distance measuring module to initialize.

In some embodiments, the navigation module includes an inertial measuring unit and a GNSS positioning unit.

In some embodiments, the step of obtaining relative position parameters between the navigation module and the laser distance measuring module includes: obtaining the relative position parameters among the inertial measuring unit, the GNSS positioning unit and the laser distance measuring module.

In some embodiments, the step of obtaining first measurement information of the navigation module includes: obtaining positioning information output by the GNSS positioning unit.

In some embodiments, the step of obtaining second measurement information of the navigation module includes: obtaining positioning information output by the GNSS positioning unit and attitude information output by the inertial measuring unit.

In some embodiments, the measurement modes are switched manually or automatically.

An embodiment of the present disclosure further provides a measurement system for implementing the above-mentioned control method, wherein the measurement system includes a navigation module, a laser distance measuring module, a support portion and a control module. The control module is configured to obtain relative position parameters between the navigation module and the laser distance measuring module; obtain parameter information of the support portion; switch the measurement system to a first measurement mode, obtain first measurement information of the navigation module, and obtain coordinates of a point to be measured according to the first measurement information and the parameter information of the support portion; or switch the measurement system to a second measurement mode, obtain second measurement information of the navigation module, and obtain coordinates of a point to be measured according to the second measurement information and the parameter information of the support portion; or switch the measurement system to a third measurement mode, obtain second measurement information of the navigation module and distance information between the laser distance measuring module and a point to be measured, and obtain coordinates of the point to be measured according to the second measurement information, the relative position parameters between the navigation module and the laser distance measuring module, and the distance information.

An embodiment of the present disclosure further provides a computer readable medium having executable instructions stored thereon, and when the instructions are executed by one or more processors, the above-mentioned control method is performed.

Compared with the prior art, the embodiments of the present disclosure have at least one of the following advantages:

The measurement system and control method provided in the present disclosure can comprehensively utilize differential Beidou satellite signals, single-point Beidou satellite signals and various sensor information from inertial navigation systems, laser distance measuring modules, etc., and have the advantages of high positioning and navigation accuracy, and have multiple measurement modes that can be flexibly switched. It can still be applied in special measurement scenarios such as facade and non-contact measurement.

### BRIEF DESCRIPTION OF THE DRAWINGS

Non-limiting and non-exhaustive embodiments of the present disclosure are described with reference to the following drawings, wherein the same reference numbers refer to the same parts throughout the various drawings unless otherwise specified. Components in the drawings are not drawn to scale and may be drawn out of scale to facilitate understanding of the embodiments of the present disclosure.
FIG. 1 is a schematic flow chart of a control method provided in an embodiment of the present disclosure.
FIG. 2 is a structural schematic view of a measurement system provided by an embodiment of the present disclosure.
FIG. 3 is a schematic view of an application program that applies the control method of FIG. 1, provided by an embodiment of the present disclosure.

### DETAILED DESCRIPTION

The following description illustrates the general principles of the present disclosure and is not intended to limit the application concepts to be protected. Furthermore, specific features described herein may be used in combination with other described features in each of the various possible combinations and arrangements.

It should be understood that the term "and/or" in the present disclosure is only a description of the association relationship of associated objects, indicating that there may be three possible relationships. For example, A and/or B can mean: A exists alone, B exists alone, and A and B exist at the same time. In addition, the character "/" in the present disclosure generally indicates that the previous and subsequent associated objects are in an "or" relationship.

It will be understood that when an element is referred to as being "connected," "connected" or "coupled" to another element, it can be connected or coupled to the other element directly or through intervening elements. In contrast, when an element is referred to as being "directly connected to" or "directly coupled to" another element, no intervening elements exist. Other words used to describe the relationship between elements should be interpreted in a similar fashion (e.g., "between" and "directly between," "adjacent" and "directly adjacent," etc.).

The terms used herein are for describing particular embodiments only and are not intended to limit the embodiments of the present disclosure. As used herein, the singular forms "a", "an" and "the" are intended to include the plural forms as well, unless the context clearly indicates otherwise. It should also be understood that the terms "includes," "comprising," "including," and/or "comprising," used herein specify the presence of stated features, integers, steps, operations, units, and/or components, and do not preclude the presence or addition of one or more other features, numbers, steps, operations, units, components, and/or combinations thereof.

It should also be noted that in some alternative embodiments, the functions/acts may be performed in an order different from the order shown in the drawings. For example, two drawings shown in succession may be executed substantially concurrently or may sometimes be executed in a reverse order, depending on the functions/acts involved.

Unless otherwise specifically defined herein, all terms are to be given their broadest interpretations, including the meanings implied by the description and the meanings as understood by those skilled in the art and/or the meanings as defined in dictionaries, papers, etc. **In** order to explain the technical contents, structural features, objectives and effects of the present disclosure in detail, the present disclosure will be described in detail with reference to the embodiments and the accompanying drawings.

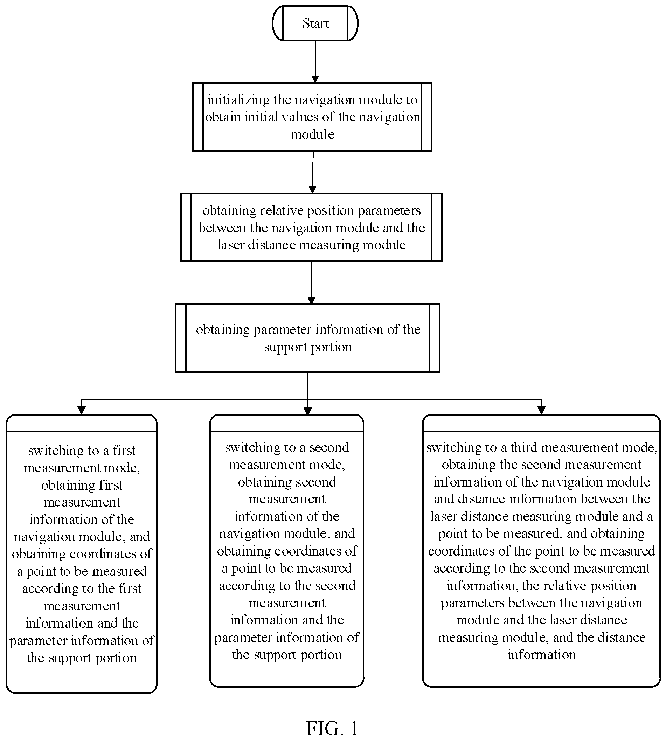

FIG. 1 is a flow chart of a control method provided in an embodiment of the present disclosure. The present embodiment provides a control method of a measurement system. The measurement system includes a navigation module, a laser distance measuring module and a support portion. The control method includes: initializing the navigation module to obtain initial values of the navigation module; obtaining relative position parameters between the navigation module and the laser distance measuring module; obtaining parameter information of the support portion; switching to a first measurement mode, obtaining first measurement information of the navigation module, and obtaining coordinates of a point to be measured according to the first measurement information and the parameter information of the support portion, or; switching to a second measurement mode, obtaining second measurement information of the navigation module, and obtaining coordinates of a point to be measured according to the second measurement information and the parameter information of the support portion, or; switching to a third measurement mode, obtaining second measurement information of the navigation module and distance information between the laser distance measuring module and a point to be measured, and obtaining coordinates of the point to be measured according to the second measurement information, the relative position parameters between the navigation module and the laser distance measuring module, and the distance information.

Wherein the steps of initializing the navigation module to obtain initial values of the navigation module, obtaining relative position parameters between the navigation module and the laser distance measuring module, and obtaining parameter information of the support portion are not limited to be performed in a particular order, and the parameters involved are independent of each other and can be collected separately according to users' needs.

Wherein the step of initializing the navigation module to obtain initial values of the navigation module may include using the navigation module and the support portion to initialize or using the navigation module and the laser distance measuring module to initialize. Specifically, taking the support portion being a centering rod as an example, using the navigation module and the centering rod to initialize may include initializing by tilting, translating, and rotating the centering rod in the horizontal plane. Using the navigation module and the laser distance measuring module to initialize may include initializing by moving the laser distance measuring module multiple positions, rotate, tilt, and take other different actions to the laser distance measuring module and keep the laser indication pointed at the same position for initialization. Users can adopt different initialization methods according to different test environments, which will not be repeated here. The relative position parameters between the navigation module and the laser distance measuring module can be obtained after the measurement device is assembled. The parameter information of the support portion at least includes height or length information of the support portion.

In this embodiment, the navigation module includes an inertial measuring unit and a GNSS (Global Navigation Satellite System) positioning unit. The step of obtaining the relative position parameters between the navigation module and the laser distance measuring module includes: obtaining the relative position parameters among the inertial measuring unit, the GNSS positioning unit and the laser distance measuring module.

In the first measurement mode, after the measurement system is initialized and horizontal leveled, obtaining first measurement information of the navigation module includes: obtaining positioning information output by the GNSS positioning unit. The method for obtaining the positioning information output by the GNSS positioning unit can be single-point precise positioning or real-time differential positioning technology. This embodiment does not limit this. After obtaining the positioning information output by the GNSS positioning unit, combined with the height or length information of the support portion, coordinates of the bottom of the support portion, that is, coordinates of the point to be measured, can be obtained. This measurement mode is suitable for measurement scenarios in open areas where the support portion can remain horizontal.

In the second measurement mode, after the measurement system is initialized, obtaining second measurement information of the navigation module includes: obtaining positioning information output by the GNSS positioning unit and attitude information output by the inertial measuring unit, and combining the height or length information of the support portion to obtain the coordinates of the bottom of the support portion, that is, the point to be measured. This measurement mode is suitable for measurement scenarios where the support portion cannot remain horizontal, such as corners.

In the third measurement mode, after the measurement system is initialized, obtaining second measurement information of the navigation module includes: obtaining positioning information output by the GNSS positioning unit and attitude information output by the inertial measuring unit, combining the relative position parameters between the navigation module and the laser distance measuring module, and distance information between the laser distance measuring module and the point to be measured, the coordinates of the laser indication point, i.e., the point to be measured, can be obtained. This measurement mode is suitable for measurement scenarios where the support rod cannot reach, such as wall surfaces or the air.

The above-mentioned measurement modes are switched manually or automatically. The control module can automatically switch the measurement modes by identifying whether the measurement device is kept horizontal and whether the laser distance measuring module is turned on.

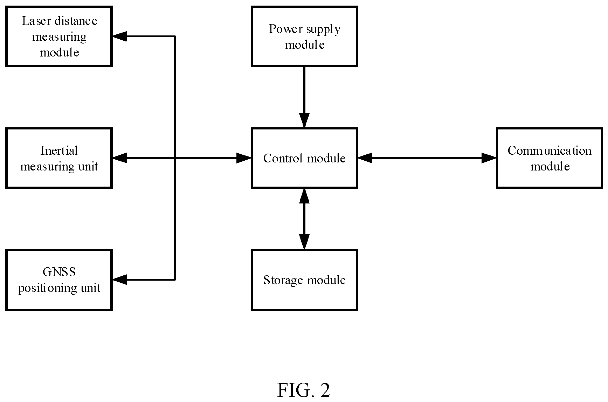

FIG. 2 is a structural schematic view of a measurement system provided by an embodiment of the present disclosure, which is used to implement the above-mentioned control method. The measurement system includes a navigation module, a laser distance measuring module, a support portion and a control module. The navigation module includes a GNSS positioning unit and an inertial measuring unit. The control module is configured to obtain relative position parameters between the navigation module and the laser distance measuring module; obtain parameter information of the support portion; switch the measurement system to a first measurement mode, obtain first measurement information of the navigation module, and obtain coordinates of a point to be measured according to the first measurement information and the parameter information of the support portion; or switch the measurement system to a second measurement mode, obtain second measurement information of the navigation module, and obtain coordinates of a point to be measured according to the second measurement information and the parameter information of the support portion; or switch the measurement system to a third measurement mode, obtain second measurement information of the navigation module and distance information between the laser distance measuring module and a point to be measured, and obtain coordinates of the point to be measured according to the second measurement information, the relative position parameters between the navigation module and the laser distance measuring module, and the distance information.

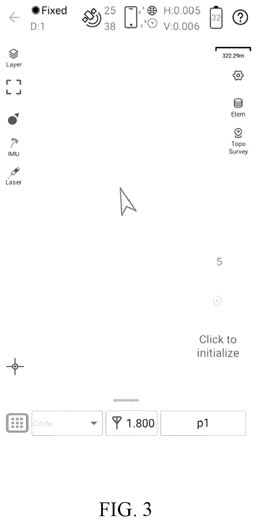

FIG. 3 is a schematic view of an application program that applies the control method of FIG. 1, provided by an embodiment of the present disclosure. This embodiment provides a computer readable medium having executable instructions stored thereon, and when the instructions are executed by one or more processors, the above-mentioned control method is performed.

The measurement system and control method provided in the present disclosure can comprehensively utilize differential positioning satellite signals, single-point positioning satellite signals and various sensor information from inertial navigation systems, laser distance measuring modules, etc., and have the advantages of high positioning and navigation accuracy, and have multiple measurement modes that can be flexibly switched. It can be still applied in special terrain conditions such as corners of walls and facades.

Through the description of the above embodiments, those skilled in the art can clearly understand that the present disclosure can be implemented by software and the necessary hardware platform, and of course can also be implemented entirely by hardware. Based on this understanding, all or part of the technical solution of the present disclosure that has made contributions to the background technology can be realized in the form of a computer software product. The computer software product can be stored in a storage medium, such as ROM/RAM, a disk, an optical disk, etc., and includes a number of instructions for enabling a computer device (which can be a personal computer, a server, or a network device, etc.) to execute the method of each embodiment of the present disclosure or certain parts of the embodiments.

In the embodiments of the present disclosure, the units/modules may be implemented using software to be executed by various types of processors. An identified executable code module may include, for example, one or more physical or logical blocks of computer instructions, which may, for example, be structured as an object, procedure, or function. Nevertheless, the identified executable code modules do not need to be physically located together, but may include different instructions stored in different locations which, when joined logically together, constitute the unit/module and achieve the stated function of the unit/module.

When a unit/module can be implemented by software, considering the level of existing hardware technology, those skilled in the art can build corresponding hardware circuits to realize corresponding functions of units/modules that can be implemented by software without considering the cost. The hardware circuits include conventional very large-scale integration (VLSI) circuits or gate arrays and existing semiconductors such as logic chips and transistors or other discrete components. A module may also be implemented with programmable hardware devices such as field programmable gate arrays, programmable array logic, programmable logic devices, etc.

While certain embodiments of the present disclosure have been described, these embodiments have been presented by way of example only, and are not intended to limit the scope of the present disclosure. Indeed, the novel methods and systems described herein may be embodied in a variety of other forms; furthermore, various omissions, substitutions and changes can be made to the methods and systems described herein without departing from the spirit of the present disclosure. The accompanying claims and their equivalents are intended to cover such forms or modifications as would fall within the scope and spirit of the present disclosure.

## Claims

1. A control method of a measurement system comprising a navigation module, a laser distance measuring module and a support portion, wherein the control method comprises:
obtaining relative position parameters between the navigation module and the laser distance measuring module;
obtaining parameter information of the support portion;
switching to a first measurement mode, obtaining first measurement information of the navigation module, and obtaining coordinates of a point to be measured according to the first measurement information and the parameter information of the support portion, or;
switching to a second measurement mode, obtaining second measurement information of the navigation module, and obtaining coordinates of a point to be measured according to the second measurement information and the parameter information of the support portion, or;
switching to a third measurement mode, obtaining second measurement information of the navigation module and distance information between the laser distance measuring module and a point to be measured, and obtaining coordinates of the point to be measured according to the second measurement information, the relative position parameters between the navigation module and the laser distance measuring module, and the distance information.

2. The control method according to claim 1, wherein the method further comprises: initializing the navigation module to obtain initial values of the navigation module.

3. The control method according to claim 2, wherein the step of initializing the navigation module to obtain initial values of the navigation module comprises: using the navigation module and the support portion to initialize or using the navigation module and the laser distance measuring module to initialize.

4. The control method according to claim 1, wherein the navigation module includes an inertial measuring unit and a GNSS positioning unit.

5. The control method according to claim 4, wherein the step of obtaining relative position parameters between the navigation module and the laser distance measuring module comprises: obtaining relative position parameters among the inertial measuring unit, the GNSS positioning unit and the laser distance measuring module.

6. The control method according to claim 4, wherein the step of obtaining first measurement information of the navigation module comprises: obtaining positioning information output by the GNSS positioning unit.

7. The control method according to claim 4, wherein the step of obtaining second measurement information of the navigation module comprises: obtaining positioning information output by the GNSS positioning unit and attitude information output by the inertial measuring unit.

8. The control method according to claim 1, wherein the measurement modes are switched manually and automatically.

9. A measurement system for implementing the control method according to any one of claims 1 to 8, wherein the measurement system comprises a navigation module, a laser distance measuring module, a support portion and a control module, wherein the control module is configured to:
obtain relative position parameters between the navigation module and the laser distance measuring module;
obtain parameter information of the support portion;
switch the measurement system to a first measurement mode, obtain first measurement information of the navigation module, and obtain coordinates of a point to be measured according to the first measurement information and the parameter information of the support portion;
or switch the measurement system to a second measurement mode, obtain second measurement information of the navigation module, and obtain coordinates of a point to be measured according to the second measurement information and the parameter information of the support portion;
or switch the measurement system to a third measurement mode, obtain second measurement information of the navigation module and distance information between the laser distance measuring module and a point to be measured, and obtain coordinates of the point to be measured according to the second measurement information, the relative position parameters between the navigation module and the laser distance measuring module, and the distance information.

10. A computer readable medium having executable instructions stored thereon, wherein when the instructions are executed by one or more processors, the control method according to any one of claims 1 to 8 is performed.
